# EUROPÄISCHE PATENTSCHRIFT

(11) **EP 0 470 298 B1**
(45) Veröffentlichungstag und Bekanntmachung des Hinweises auf die Patenterteilung: **28.07.1993**
(21) Anmeldenummer: 90125627.1
(22) Anmeldetag: 28.12.1990
(51) Int. Cl.: B62D 33/02, B62D 27/06

(54) **Riegelspannverschluss für abklappbare Bordwände von Lastfahrzeugen**
Locking bar for pivotally mounted sideboards of lorries
Boulon de verrouillage pour ridelles rabattables pour camions

(30) Priorität: 06.08.1990 DE 9011442 U
(43) Veröffentlichungstag der Anmeldung: 12.02.1992
(73) Patentinhaber: F. HESTERBERG & SÖHNE GmbH & Co. KG, D-58256 Ennepetal (DE)
(72) Erfinder: Feinbier, Joachim, W-5828 Enneptal 15 (DE); Nieland, Friedhelm, W-5805 Breckerfeld (DE); Sterner, Bernd, W-5800 Hagen 1 (DE)
(74) Vertreter: Kneissl, Richard, Dr.

(56) Entgegenhaltungen:
- EP-B- 0 196 080
- CH-A- 591 982
- DE-C- 1 678 155

## Beschreibung

Die Erfindung betrifft einen Riegelspannverschluß gemäß dem Oberbegriff des vorstehenden Anspruchs 1, wie er beispielsweise aus der DE-PS 16 78 155 und der EP-PS 196 080 bekannt ist.

Diese Verschlüsse besitzen den Nachteil, daß sie sich ohne weiteres öffnen lassen, wenn Ladungsgut gegen die Borwand drückt. Es kommt nicht selten vor, daß während der Fahrt Ladungsgut verrutscht und gegen die Bordwand drückt. Wird dann der Bordwandverschluß geöffnet, so wird die Borwand heruntergeschleudert, wobei auch Ladungsgut herunterfallen kann. Dabei kann es leicht zu Verletzungen kommen.

Der Erfindung lag die Aufgabe zugrunde, einen in Rede stehenden Verschluß so weiterzubilden, daß er sich nicht öffnen läßt, wenn von innen her Druck auf der Bordwand liegt.

Die Lösung dieser Aufgabe ergibt sich aus dem Kennzeichen des vorstehenden Anspruchs 1. Anspruch 2 betrifft eine vorteilhafte Weiterbildung.

Die Erfindung wird anhand der beigefügten Zeichnungen näher erläutert. In den Zeichnungen zeigen:
Figur 1 eine Schnittdarstellung von einen erfindungsgemäßen Riegelspannverschluß,
Figur 2 eine Aufsicht auf einem erfindungsgemäßen Riegelspannverschluß und
Figur 3 einen ähnlichen Schnitt wie Figur 1, wobei jedoch der Verschluß teilweise geöffnet ist.

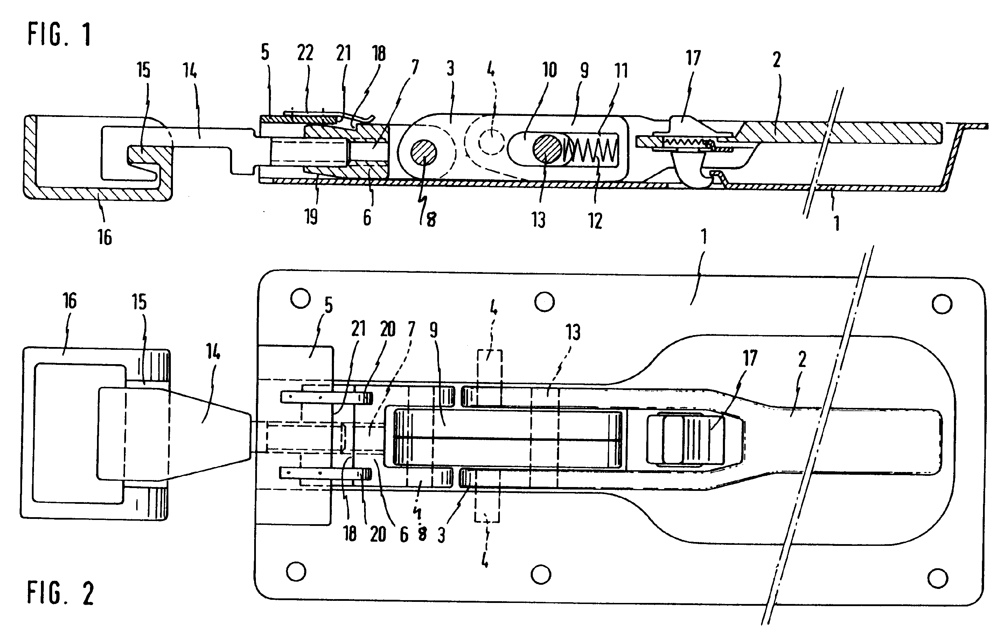

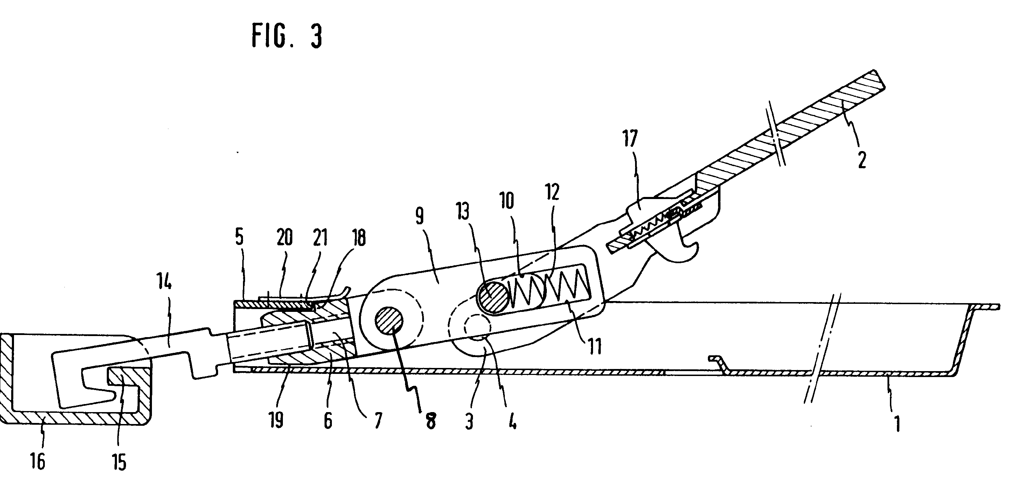

Gemäß den Figuren 1, 2 und 3 besitzt der Riegelspannverschluß eine Einbauwanne 1, wie sie bei Verschlüssen dieser Art üblich ist. In der Einbauwanne 1 ist eine Handhabe 2 angelenkt. Das angelenkte Ende 3 der Handhabe 2 ist gabelförmig ausgebildet und mit Hilfe von Achsen 4 in den Seitenwandungen der Einbauwanne 1 gelagert. In der Einbauwanne 1 ist weiterhin unterhalb einer Abdeckplatte 5 ein Riegelstumpf 6 längsverschieblich gelagert. Der Riegelstumpf 6 besitzt eine Gewindebohrung 7. Am rückwärtigen Ende ist der Riegelstumpf gabelförmig ausgebildet und besitzt dort Bohrungen für die Aufnahme einer Achse 8, mit deren Hilfe ein Ende eines Verbindungsglieds 9 am Riegelstumpf 6 angelenkt ist. Das Verbindungsglied 9 besteht aus zwei spiegelbildlichen Platten, die im Bereich des anderen Endes ein Langloch 10 und eine sich daran anschließende Vertiefung 11 aufweisen. In der Vertiefung 11 ist eine Druckschraubenfeder 12 angeordnet, die sich mit einem Ende an einer Achse 13 abstützt, die die Handhabe 2 mit dem Verbindungsglied 9 verbindet. In die Gewindebohrung 7 des Riegelstumpfs 6 ist ein Riegelhaken 14 eingeschraubt. Durch Verdrehen des Riegelhakens 14 bezüglich des Riegelstumpfs 6 kann die Länge des Riegels eingestellt werden. Das Langloch 10 und die Druckschraubenfeder 12 verleihen dem System eine gewisse Nachgiebigkeit, damit die Riegellänge nicht allzu genau eingestellt werden muß und daß der Verschluß in der Verriegelungsstellung unter Spannung steht und die Handhabe niedergehalten wird.

In der Verriegelungsstellung greift der Riegelhaken 14 hinter eine Leiste 15 eines als Tasche ausgebildeten Gegenelemts 16 und ist gegen dieses verspannt.

Es ist ersichtlich, daß in der Verriegelungsstellung sich die Achse 13 bezüglich der Achsen 4 und 8 in einer Übertotpunktlage befindet, wodurch die Handhabe 2 niedergehalten wird, wenn der Verschluß sich in der Verriegelungsstellung befindet.

Die Schließlage der Handhabe 2 ist zusätzlich zum Totpunktüberzug noch durch einen Schieber 17 üblicher Bauart gesichert.

Zur Sicherung gegen Öffnen bei Ladungsdruck gegen die Bordwand ist auf der Oberseite des Riegelstumpfs 6 eine Stufe 18 vorgesehen und besitzt der Riegelstumpf 6 weiterhin auf seiner Unterseite ein Abrundung 19. Diese Ausbildung ermöglicht es, daß der Riegelstumpf 6 etwas geschwenkt werden kann. Liegt nun beim Öffen der Verschlusses Ladungsdruck auf der Bordwand, so verschwenkt der Riegelstumpf 7 etwas. Dies hat zur Folge, daß beim weiteren Öffnen die Stufe 18 auf dem Riegelstumpf 6 mit einer Kante 21 an der Abdeckplatte 5 in Anlage kommt, so daß ein weiteres Öffnen des Verschlusses verhindert wird. Um den Verschluß vollständig öffnen zu können, muß zuerst der Ladungsdruck beseitigt werden, damit die Borwand in ihre vollständig senkrechte Lage gebracht werden kann, wodurch der Riegelstumpf zurückschwenkt, so daß die Stufe 18 außer Anlage mit der Kante 21 der Abdeckplatte 5 kommt. Der Verschluß kann dann vollständig geöffnet werden.

Damit beim Öffnen des Verschlusses ohne Ladungsinnendruck ein unbeabsichtigtes Verschwenken des Riegelstumpfs 6 und eine Anlage der Stufe 18 an der Kante 21 der Abdeckplatte 5 verhindert wird, sind auf der Abdeckplatte 5 zwei Niederhaltefedern 20 vorgesehen, die die Stufe 18 beim Öffnen des Verschlusses unter die Abdeckplatte 5 führen. Sie sind aber in ihrer Stärke so gewählt, daß sie bei Ladungsinnendruck gegen die Bordwand nachgeben und eine Anlage der Stufe 18 an der Kante 21 der Abdeckplatte 5 ermöglichen.

## Patentansprüche

1. Riegelspannverschluß für abklappbare Bordwände von Lastfahrzeugen, mit einem in einer Einbauwanne (1) geführten, längenverstellbaren Riegel (6, 14), der aus einem Riegelstumpf (6) und aus einem in diesen eingeschraubten Riegelhaken (14) besteht und der mittels einer in die Einbauwanne (1) angelenkten Handhabe (2) über ein einerseits an der Handhabe (2) und andererseits am Riegelstumpf (6) angelenktes Verbindungsglied (9) in Verriegelungsstellung bringbar ist, in welcher sich die Anlenkachse (13) zwischen dem Verbindungsglied (9) und der Handhabe (2) in bezug auf die Anlenkachse (4) zwischen der Handhabe (2) und der Einbauwanne (1) und in bezug auf die Anlenkachse (8) zwischen dem Verbindungsglied (9) und dem Riegelstumpf (6) in einer Übertotpunktstellung befindet, und mit einem an einem festen Teil des Fahrzeugaufbaus zu befestigenden Gegenelement (17), gegen welches in der Verriegelungsstellung der Riegel (6,14) verspannt ist, **dadurch gekennzeichnet**, daß der Riegelstumpf (6) in einer waagrechten und senkrecht zur Bordwand verlaufenden Ebene schwenkbar geführt ist und daß auf dem Riegelstumpf (6) eine Stufe (18) vorgesehen ist, die mit einer Kante (21) an der Einbauwanne (1) in Anlage kommt, wenn der Riegel (6, 14) in einer gegenüber seiner Bewegungsrichtung geschwenkten Lage von der Verriegelungsstellung in die Offenstellung bewegt wird, wobei die Anlage erfolgt, noch bevor der Riegelhaken (14) vom Gegenelement (16) freikommt.

2. Riegelspannverschluß nach Anspruch 1, **dadurch gekennzeichnet**, daß eine Feder (20) vorgesehen ist, die versucht den Riegelstumpf (6) in einer nicht geschwenkten Lage zu halten.

## Claims

1. Bolt toggle fastener for swing-down tailboards of trucks, comprising a length-adjustable bolt (6, 14) which is guided in a built-in trough (1) and which consists of a bolt stump (6) and a bolt hook (14) screwed into the latter and which by means of a handle (2) articulately connected into the built-in trough (1) is adapted to be brought into the locking position via a connecting member (9) articulately connected on the one hand to the handle (2) and on the other to the bolt stump (6) and in said position the pivot pin (13) between the connecting member (9) and the handle (2) is located in an over-deadcentre position with respect to the articulation pin (8) between the connecting member (9) and the bolt stump (6), and a counter element (17) which is to be mounted on a fixed part of the vehicle bodywork and against which the bolt (6, 14) is braced in the locking position, characterized in that the bolt stump (6) is guided pivotally in a plane extending horizontally and perpendicularly to the tailboard and that on the bolt stump (6) a step (18) is provided which comes into engagement with an edge (21) on the built-in trough (1) when the bolt (6, 14) is moved in a position pivoted with respect to its movement direction from the locking position to the open position, the engagement taking place before the bolt hook (14) comes free of the counter element (16).

2. Bolt toggle fastener according to claim 1, characterized in that a spring (20) is provided which tends to hold the bolt stump (16) in an unpivoted position.

## Revendications

1. Fermeture à serrage et verrouillage, de type clenche, pour hayons rabattables de véhicules utilitaires, comprenant un verrou (6, 14) réglable en longueur et guidé dans une cuvette d'encastrement (1), qui est composé d'un embout de verrou (6) et d'un crochet de verrou (14) vissé dans cet embout et pouvant être amené, au moyen d'un élément de manoeuvre (2) articulé dans la cuvette d'encastrement (1) et par l'intermédiaire d'une pièce de liaison (9) articulée d'un côté sur l'élément de manoeuvre (2) et de l'autre côté sur l'embout de verrou (6), à une position verrouillée dans laquelle l'axe d'articulation (13) entre la pièce de liaison (9) et de l'élément de manoeuvre (2) occupe une position au-delà d'un point mort par rapport à l'axe d'articulation (4) entre l'élément de manoeuvre (2) et la cuvette d'encastrement (1) et par rapport à l'axe d'articulation (8) entre la pièce de liaison (9) et l'embout de verrou (6), fermeture qui comprend en outre un contre-élément (16) à monter sur une partie fixe de la carrosserie du véhicule et par rapport auquel le verrou (6, 14) est serré à la position verrouillée, caractérisée en ce que l'embout de verrou (6) est guidé pour pouvoir pivoter dans un plan horizontal et perpendiculaire au hayon, et que l'embout de verrou (6) est pourvu d'un gradin (18) qui vient s'appliquer contre un bord (21) prévu sur la cuvette d'encastrement (1) lorsque le verrou (6, 14) est déplacé de la position verrouillée à la position ouverte sous une orientation inclinée, obtenue par pivotement par rapport à sa direction de mouv,ement, l'application contre le gradin s'effectuant avant même que le crochet de verrou (14) ne se dégage du contre-élément (16).

2. Fermeture à serrage et verrouillage selon la revendication 1, caractérisée en ce qu'elle comprend un ressort (20) qui tente de maintenir l'embout de verrou (6) à un position non inclinée.
